# EUROPEAN PATENT APPLICATION

(11) **EP 3 367 724 A1**
(43) Date of publication of application: **29.08.2018**
(21) Application number: 18151520.6
(22) Date of filing: 21.03.2012
(51) Int. Cl.: H04W 28/02, H04W 72/12

(54) **METHOD AND DEVICE FOR TRANSMITTING DATA**

(30) Priority: 31.03.2011 CN 201110081210
(62) Divisional of application: 12762792.5
(71) Applicant: HUAWEI TECHNOLOGIES CO., LTD., Guangdong 518129 (CN)
(72) Inventor: HAN, Guanglin, Shenzhen, Guangdong 518129 (CN); ZHANG, Jian, Shenzhen, Guangdong 518129 (CN); ZENG, Qinghai, Shenzhen, Guangdong 518129 (CN)
(74) Representative: Pfenning, Meinig & Partner mbB

(57) **Abstract**

The present invention discloses a method and a device for transmitting data, and belongs to the field of mobile communications. The method includes: determining a triggering state of scheduling information according to a current triggering state of the scheduling information, uplink resource required for transmitting buffered data, and acquired uplink resource, and determining scheduling information and/or buffered data to be multiplexed; and multiplexing content that has been determined to transmit on a transport block for transmission. The device includes: a multiplexing content determining module and a transmitting module. Determine according to uplink resource actually obtained by a user equipment and the triggering state of each scheduling information on the user equipment, determine multiplexing content during transmission according to a determining result, and then perform transmission, thereby shortening a delay in data transmission, ensuring flexible adjustment on data transmission based on the specific situations of data of the user equipment in the case of limited resource, avoiding excessive scheduling signaling generated during the transmission between a base station and the user equipment, and guaranteeing real-time performance in data transmission.

## Description

This application claims priority to Chinese Patent Application No. 201110081210.4, filed on March 31, 2011 and entitled "METHOD AND DEVICE FOR TRANSMITTING DATA", which is incorporated herein by reference in its entirety.

### TECHNICAL FIELD

The present invention relates to the field of mobile communications, and in particular, to a method and a device for transmitting data.

### BACKGROUND

The wireless access technology for a wireless cellular mobile network is developing continuously to meet demands for a higher rate, a broader coverage and a larger capacity of future users. At present, the technology evolution is from a 3G system to an LTE (Long Term Evolution, long term evolution) system, and further to an LTE-Advanced system.

For a communications system, such as the LTE system, both an uplink and a downlink support fast scheduling and link adaptation technologies. Therefore, the LTE system may perform allocation of time-frequency resource based on an instant demand of a user and a channel state. In the uplink scheduling technology, since the LTE system may divide frequency domain resource into a plurality of segments, and therefore the LTE system may schedule resource for a plurality of user equipments (User Equipment, UE for short) at the same time on the same sub-frame. Radio resource used by a UE to transmit uplink data to the network rely on a base station, such as an eNodeB for allocation. The eNodeB notifies the UE of the radio resource allocated to a specific UE in a signaling manner, and the UE transmits the uplink data on resource indicated by the signaling. Before the eNodeB schedules resource for the UE, the eNodeB needs to determine the size of resource allocated to a specific UE. To avoid unnecessary radio resource waste as far as possible, the eNodeB needs to allocate proper resource to the UE to achieve the objective of fully utilizing the radio resource. To achieve the objective, the UE needs to report to the eNodeB its buffered data volume in a signaling manner, then the eNodeB comprehensively evaluate priority, amount, and other factors of the buffered data volume, and finally initiates data scheduling for users.

In the prior art, data transmitted by the UE may be transmitted through a plurality of times of scheduling. Therefore, the communications technology may specify the transmission priority of different types of information units such as a MAC CE (media access control control element, Media Access Control Control Element) or an SDU (Service Data Unit, service data unit), that is, data with a higher priority is preferentially multiplexed on a transport block (TB, transport block) for transmission. For an information unit with a low priority, when resource is limited, it may be multiplexed on a transport block for transmission only after information units with a higher priority have been transmitted. During data transmission, due to the transmission of unnecessary MAC CEs, data transmission is incomplete, and further unnecessary signaling scheduling is caused, so that a delay occurs in data transmission, and data transmission requires a long period of time.

### SUMMARY

To reduce a transmission delay and save scheduling signaling, embodiments of the present invention provide a method and a device for transmitting data. The technical solutions are as follows.

In an aspect of the present invention, a method for transmitting data is provided, including:
determining a triggering state of scheduling information according to a current triggering state of the scheduling information, uplink resource required for transmitting buffered data, and acquired uplink resource, and determining scheduling information to be multiplexed and/or buffered data to be multiplexed, where the scheduling information is reference information for a base station to schedule resource for a user equipment UE; and
multiplexing the scheduling information and the buffered data which have been determined to be multiplexed on a transport block for transmission.

In an aspect of the present invention, a device for transmitting data is provided, including:
a multiplexing content determining module, configured to determine a triggering state of scheduling information according to a current triggering state of the scheduling information, uplink resource required for transmitting buffered data, and acquired uplink resource, and determine scheduling information to be multiplexed and/or buffered data to be multiplexed, where the scheduling information is reference information for a base station to schedule resource for a user equipment UE; and
a transmitting module, configured to multiplex the scheduling information and the buffered data which have been determined to be multiplexed on a transport block for transmission.

In an aspect of the present invention, a user equipment is provided, including any foregoing device for transmitting data.

Beneficial effects of the technical solutions provided in the embodiments of the present invention are as follows:

Determine according to uplink resource actually obtained by a user equipment and the triggering state of each piece of scheduling information on the user equipment, determine multiplexing content during transmission according to a determining result, and then perform transmission, thereby shortening a delay in data transmission, ensuring flexible adjustment on data transmission based on the specific situations of data of the user equipment in the case of limited resource, avoiding excessive scheduling signaling generated during the transmission between a base station and the user equipment, and guaranteeing real-time performance in data transmission.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from the accompanying drawings without creative efforts.
FIG. 1 is a flowchart of an embodiment of a method for transmitting data according to the present invention;
FIG. 2 is a flowchart of an embodiment of a method for transmitting data according to the present invention;
FIG. 3 is a flowchart of an embodiment of a method for transmitting data according to the present invention;
FIG. 4 is a flowchart of an embodiment of a method for transmitting data according to the present invention;
FIG. 5 is a flowchart of an embodiment of a method for transmitting data according to the present invention;
FIG. 6 is a flowchart of an embodiment of a method for transmitting data according to the present invention;
FIG. 7 is a flowchart of an embodiment of a method for transmitting data according to the present invention;
FIG. 8 is a schematic structural diagram of an embodiment of a device for transmitting data according to the present invention; and
FIG. 9 is a schematic structural diagram of an embodiment of a device for transmitting data according to the present invention.

### DESCRIPTION OF EMBODIMENTS

To make the objectives, technical solutions, and advantages of the embodiments of the present invention more clearly, the following further describes the embodiments of the present invention in detail with reference to the accompanying drawings.

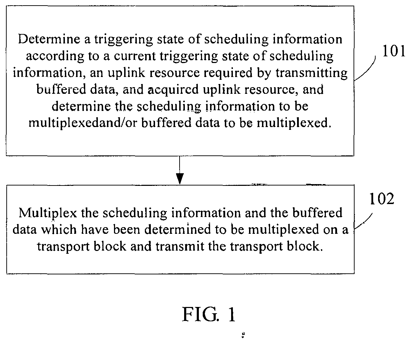

FIG. 1 is a flowchart of a method for transmitting data according to an embodiment of the present invention. The execution body in this embodiment is a user equipment. Referring to FIG. 1, the embodiment specifically includes:
Step 101: Determine a triggering state of scheduling information according to a current triggering state of the scheduling information, uplink resource required for transmitting buffered data, and acquired uplink resource, and determine scheduling information to be multiplexed and/or buffered data to be multiplexed, where
   the scheduling information is reference information for a base station to schedule resource for a UE; and the triggering state of the scheduling information includes "have been triggered" and "not triggered yet", and correspondingly, the determining a triggering state of scheduling information includes: canceling the triggering state of the scheduling information that has been triggered, or maintaining the triggering state of the scheduling information that has been triggered but delaying transmitting the scheduling information.

The foregoing buffered data may be all buffered data.

It should be noted that the current triggering state of the scheduling information in the present invention may be a current triggering state of each piece of scheduling information, or a current triggering state of all scheduling information, or a current triggering state of at least two pieces of scheduling information. The foregoing scheduling information includes a BSR and/or a PHR. In the following embodiments, only the BSR and the PHR are used as examples for description.

Step 102: Multiplex the scheduling information and the buffered data which have been determined to be multiplexed on a transport block for transmission.

Determine according to uplink resource actually obtained by a user equipment and the triggering state of each scheduling information on the user equipment, determine multiplexing content during transmission according to a determining result, and then perform transmission, thereby shortening a delay in data transmission, ensuring flexible adjustment on data transmission based on the specific situations of data of the user equipment in the case of limited resource, avoiding excessive scheduling signaling generated during the transmission between a base station and the user equipment, and guaranteeing real-time performance in data transmission.

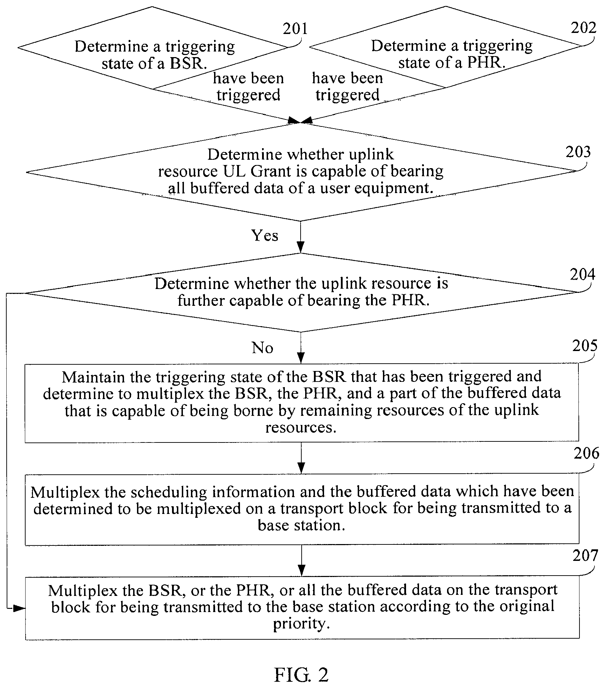

FIG. 2 is a flowchart of a method for transmitting data according to an embodiment of the present invention. The execution bodies in this embodiment are a user equipment and a base station. Referring to FIG. 2, the specifically includes:
Step 201: Determine a triggering state of a BSR (Buffer Status Report, buffer status report).

A person skilled in the art may know that the BSR may be triggered through expiration of a periodic BSR timer. Besides, the BSR may be triggered by other conditions, which is not specifically limited in this embodiment.

Step 202: Determine a triggering state of a PHR (Power Headroom Report, power headroom report).

A person skilled in the art may know that the PHR may be triggered through periodic expiration of a PHR timer. Besides, the PHR may be triggered by other conditions, which is not specifically limited in this embodiment.

Step 203: Determine whether the current uplink resource UL Grant allocated by a base station to a user equipment is capable of bearing all buffered data of the user equipment after determining that the triggering states of the BSR and the PHR are "have been triggered", and if yes, perform step 204; if no, perform step 207, where
the determining whether the current uplink resource UL Grant allocated by a base station to a user equipment is capable of bearing all buffered data of the user equipment is to determine whether the uplink resource obtained by the user equipment are greater than the uplink resource required for all the buffered data. A UL Grant is an uplink resource obtained by the user equipment.

All the buffered data is buffered by user equipments. In an LTE system, because resource is allocated temporarily, a base station needs to transmit control signaling for scheduling before the user equipments transmit data so as to facilitate resource allocation for the user equipments. Assuming that all buffered data needed to be transmitted by the user equipments requires uplink resource of 100 bytes, resource allocated by the base station may be capable of bearing 100 bytes, or may not be capable of bearing 100 bytes. Therefore, bearing capacity of resource needs to be determined before the user equipments obtain the resource provided by the base station.

Step 204: Determine whether the uplink resource is capable of further bearing the PHR, and if no, perform step 205.

Step 205: If the uplink resource is incapable of bearing all the buffered data and the PHR, maintain the triggering state of the BSR that has been triggered, and determine to multiplex the BSR, the PHR, and a part of the buffered data that is capable of being borne by remaining resource of the uplink resource.

In step 205, the obtained uplink resource is incapable of bearing all buffered data and the PHR. In this situation, the PHR and the BSR are completely transmitted, and then the remaining uplink resource after the PHR and the BSR are borne are used for bearing the buffered data. The buffered data borne by the uplink resource is a part of all the buffered data, and the BSR notifies the base station of the rest of the buffered data.

Step 206: Multiplex the scheduling information and the buffered data which have been determined to be multiplexed on a transport block for being transmitted to the base station.

A person skilled in the art may know that, in the prior art, when uplink resource is capable of bearing all data needs to be transmitted but incapable of bearing a BSR and all data, and the uplink resource is incapable of bearing all buffered data and a PHR, the transmission of the BSR is canceled, however, since the PHR has been triggered, and the multiplexing priority of the PHR is higher than that of the data to be transmitted, the PHR, in this situation, takes precedence over the data in being multiplexed on a transport block. Therefore, the buffered data of the user equipment cannot be transmitted completely. Because the transmission of the BSR has been canceled, when receiving a part of the buffered data, a base station cannot know the buffered data volume of the user equipment in advance because the BSR isi not received. As a result, the base station cannot allocate appropriate uplink resource for sequent scheduling of the user equipment. In this embodiment, the triggering state of the BSR that has been triggered is maintained and the BSR is transmitted to notify the base station of how much data is to be transmitted subsequently, thereby preventing data waste and allowing the base station to timely determine the state of the user equipment.

A person skilled in the art may know that, multiplexing refers to that data on a plurality of logical channels is multiplexed on one transport block for transmission. For example, a service of a video phone involves two logical channels, and is multiplexed onto one transport block for transmission.

In step 205, if the uplink resource is incapable of bearing not only all the buffered data and the PHR, but also all the buffered data and the BSR, cancel the triggering state of the BSR that has been triggered or cancel the triggering state of the PHR that has been triggered and multiplex the buffered data, or cancel the triggering state of the PHR that has been triggered and multiplex the buffered data, or cancel the triggering state of the BSR that has been triggered and multiplex the buffered data.

Step 207: Multiplex, according to the original priority, the BSR, or the PHR, or all the buffered data on the transport block for being transmitted to the base station.

In the prior art, generally speaking, the priority of BSR, PHR and other scheduling information is higher than that of all buffered data.

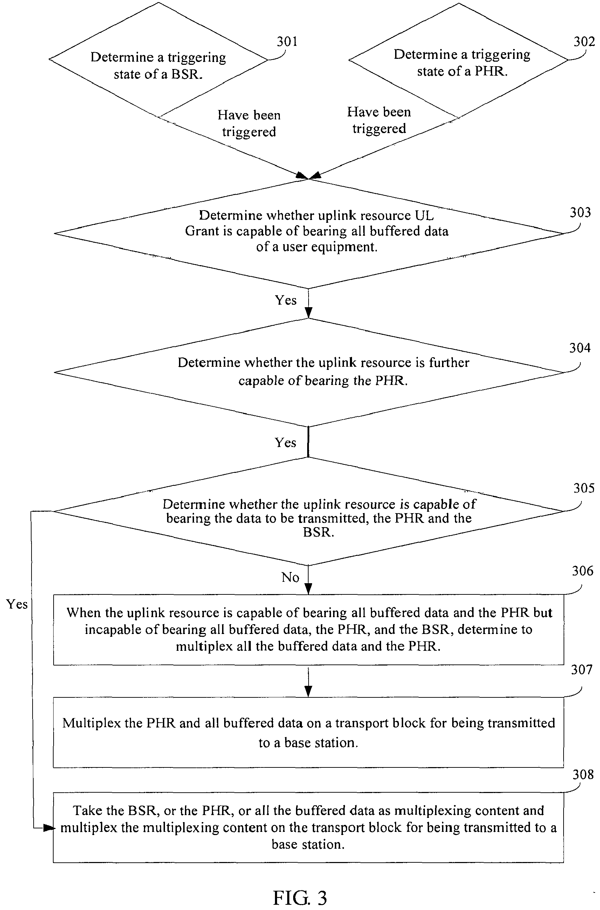

FIG. 3 is a flowchart of a method for transmitting data according to an embodiment of the present invention. The execution bodies in this embodiment are a user equipment and a base station. The difference between FIG. 2 and FIG. 3 is that: FIG. 2 shows that, whether uplink resource is capable of further bearing the PHR is determined, and a determining result is that the uplink resource is incapable of bearing data to be transmitted and the PHR; while in the embodiment shown in FIG. 3, the determining result is that the uplink resource is capable of bearing data to be transmitted and the PHR. Referring to FIG. 3, the embodiment specifically includes:
Step 301: Determine a triggering state of a BSR.
Step 302: Determine a triggering state of a PHR.
Step 303: Determine whether the current uplink resource UL Grant allocated by a base station to a user equipment is capable of bearing all buffered data of the user equipment after determining that the triggering states of the BSR and the PHR are "have been triggered", and if yes, perform step 304; if no, perform step 308.
Step 304: Determine whether the uplink resource is capable of further bearing the PHR, and if yes, perform step 305.

The principle for steps 301 to 304 is the same as that of steps 201 to 204, and details are not described herein again.

Step 305: Determine whether the uplink resource is capable of bearing data to be transmitted, the PHR, and the BSR. If no, perform step 306.

If yes, perform step 308.

Step 306: When the uplink resource is capable of bearing all buffered data and the PHR but incapable of bearing all buffered data, the PHR, and the BSR, determine to multiplex all the buffered data and the PHR.

Further, when the multiplexing priority is adjusted or before the multiplexing, the triggering state of the BSR that has been triggered may be further canceled to prevent sequent reporting of the BSR.

Step 307: Multiplex the PHR and all buffered data on a transport block for being transmitted to the base station.

Step 308: Multiplex, according to the original priority, the BSR, or the PHR, or all the buffered data on the transport block for being transmitted to the base station.

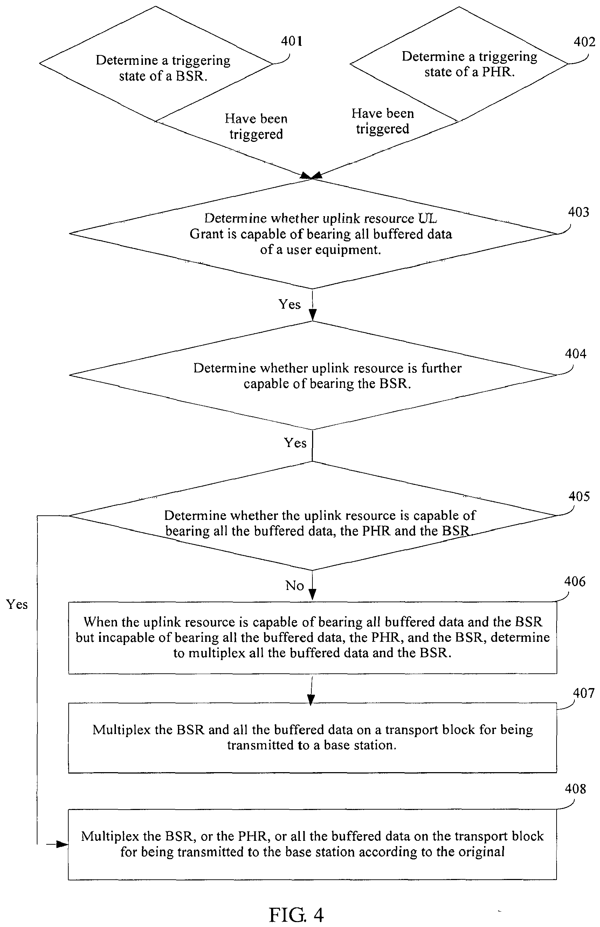

FIG. 4 is a flowchart of a method for transmitting data according to an embodiment of the present invention. The execution bodies in this embodiment are a user equipment and a base station. The difference between FIG. 3 and FIG. 4 is that: in the embodiment shown in FIG. 3, whether uplink resource is capable of further bearing the PHR is determined, and the determining result is that the uplink resource is capable of bearing all buffered data and the PHR; while in the embodiment shown in FIG. 4, whether uplink resource is capable of further bearing the BSR is determined, and the determining result is that the uplink resource is capable of bearing all the buffered data and the BSR. Referring to FIG. 4, the embodiment specifically includes:
Step 401: Determine a triggering state of a BSR.
Step 402: Determine a triggering state of a PHR.
Step 403: Determine whether the current uplink resource UL Grant allocated by a base station to a user equipment is capable of bearing all buffered data of the user equipment after determining that the triggering states of the BSR and the PHR are "have been triggered", and if yes, perform step 404; if no, perform step 408.
Step 404: Determine whether the uplink resource is capable of further bearing the BSR, and if yes, perform step 405.

The principle for steps 401 to 404 is the same as that of steps 201 to 204, and details are not described herein again.

Step 405: Determine whether the uplink resource is capable of bearing all buffered data, the PHR, and the BSR. If no, perform step 406.

If yes, perform step 408.

Step 406: When the uplink resource is capable of bearing all buffered data and the BSR but incapable of bearing all buffered data, the PHR, and the BSR, determine to multiplex all the buffered data and the BSR.

Further, when the multiplexing content is determined or before the multiplexing, the triggering state of the PHR that has been triggered may be further canceled, or the PHR that has been triggered may be delayed being multiplexed and the buffered data is preferentially transmitted to reduce a data delay.

Step 407: Multiplex the BSR and all the buffered data on a transport block for being transmitted to the base station.

Step 408: Multiplex, according to the original priority, the BSR, or the PHR, or all the buffered data on the transport block for being transmitted to the base station.

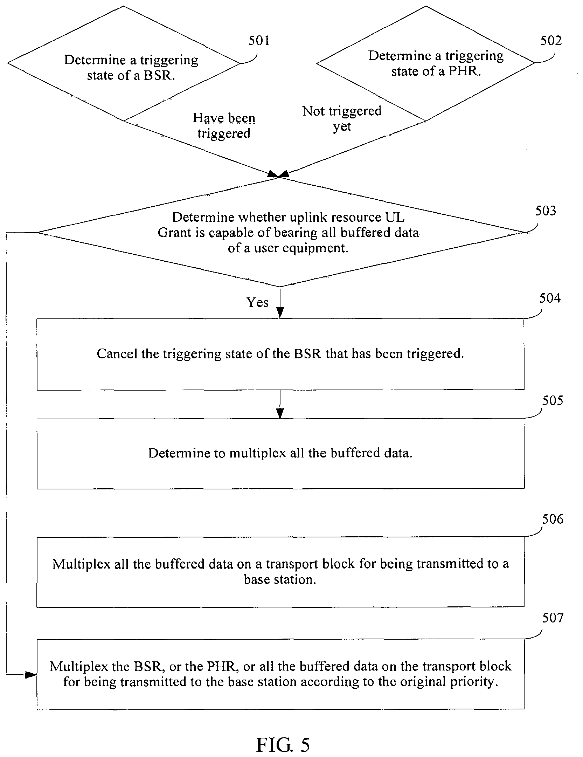

FIG. 5 is a flowchart of a method for transmitting data according to an embodiment of the present invention. The execution bodies in this embodiment are a user equipment and a base station. The difference between the embodiment shown in FIG. 5 and those shown in FIG. 2 to FIG. 4 is that: in the embodiments shown in FIG. 2 to FIG. 4, the triggering states of the BSR and the PHR are both "have been triggered"; while in the embodiment shown in FIG. 5,
the triggering state of the BSR is "have been triggered", and the triggering state of the PHR is determined to be "not triggered yet". Referring to FIG. 5, the embodiment specifically includes:
Step 501: Determine a triggering state of a BSR.
Step 502: Determine a triggering state of a PHR.
Step 503: Determine whether the current uplink resource UL Grant allocated by a base station to a user equipment is capable of bearing all buffered data of the user equipment after determining that the triggering state of the BSR is "have been triggered" and the triggering state of the PHR is "not triggered yet", and if yes, perform step 504; if no, perform step 507.

The principle for steps 501 to 503 is the same as that of steps 201 to 203, and details are not described herein again.

Step 504: Cancel the triggering state of the BSR that has been triggered.

Step 505: Determine to multiplex all buffered data.

Step 506: Multiplex all the buffered data on a transport block for being transmitted to the base station.

Step 507: Multiplex, according to the original priority, the BSR, or the PHR, or all the buffered data on the transport block for being transmitted to the base station.

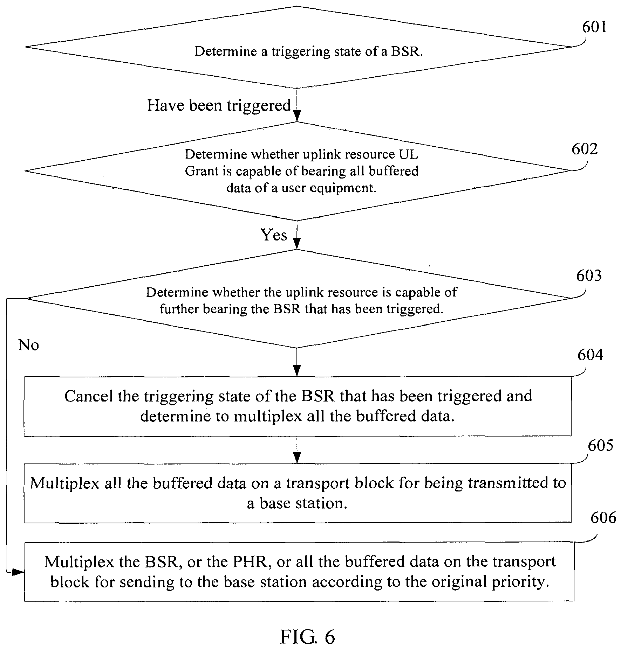

FIG. 6 is a flowchart of a method for transmitting data according to an embodiment of the present invention. The execution bodies in this embodiment are a user equipment and a base station. The difference between the embodiment shown in FIG. 6 and those shown in FIG. 2 to FIG. 5 is that: in the embodiments shown in FIG. 2 to FIG. 5, the triggering states of the BSR and the PHR are both determined; while in the embodiment shown in FIG. 6, the triggering state of only one type of scheduling information is determined. In this embodiment, adopting a BSR as the scheduling information is merely taken as an example for description. Referring to FIG. 6, the embodiment specifically includes:
Step 601: Determine a triggering state of a BSR.
Step 602: Determine whether the current uplink resource UL Grant allocated by a base station to a user equipment is capable of bearing all buffered data of the user equipment after determining that the triggering state of the BSR is "have been triggered", and if yes, perform step 603.
Step 603: Determine whether the uplink resource is capable of further bearing the BSR that has been triggered, and if yes, perform step 606.
Step 604: Cancel the triggering state of the BSR that has been triggered and determine to multiplex all the buffered data.
Step 605: Multiplex all the buffered data on a transport block for being transmitted to the base station.

In this embodiment, when the determination performed in step 601 is to determine the triggering state of the PHR and the determining result is that the triggering state of the PHR is "have been triggered". If the current uplink resource allocated to the user equipment by the base station are determined to be capable of bearing all buffered data buffered by the user equipment, whether the uplink resource is capable of bearing the PHR that has been triggered should be further determined, if not, the triggering state of the PHR that has been triggered may be canceled and it is determined to multiplex all the buffered data; or the triggering state of the PHR that has been triggered is canceled and it is determined to multiplex all the buffered data; or the triggering state of the PHR that has been triggered is maintained and it is determined to multiplex the buffered data and multiplexing the PHR is delayed.

Step 606: Multiplex, according to the original priority, the BSR, or the PHR, or all the buffered data on the transport block for being transmitted to the base station.

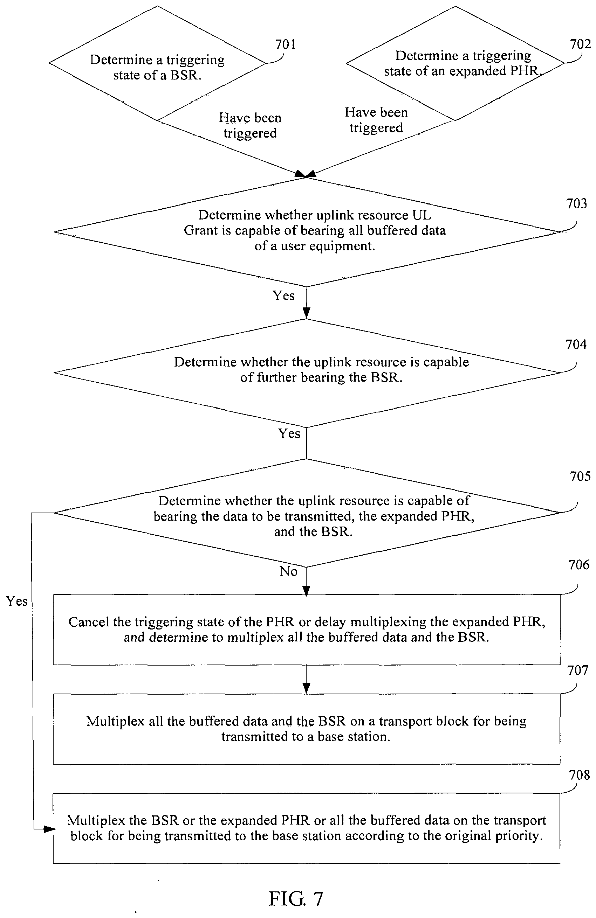

FIG. 7 is a flowchart of a method for transmitting data according to an embodiment of the present invention. The execution bodies in this embodiment are a user equipment and a base station. In the embodiments shown in FIG. 2 to FIG. 6, scheduling information may include a PHR or an extended PHR. In the embodiment shown in FIG. 7, the scheduling information includes an extended PHR whose bytes are more than twice of that of the PHR, about 4 to 13 bytes. Therefore, when uplink resource is capable of bearing all the buffered data and the BSR, but incapable of bearing all the buffered data and the extended PHR, the multiplexing content is different from that in the embodiments shown in FIG. 2 to FIG. 6. Referring to FIG. 7, the embodiment specifically includes:
Step 701: Determine a triggering state of a BSR.
Step 702: Determine a triggering state of an extended PHR.
Step 703: Determine whether the current uplink resource UL Grant allocated by a base station to a user equipment is capable of bearing all buffered data of the user equipment after determining that the triggering states of the BSR and the extended PHR are "have been triggered", and if yes, perform step 704; if no, perform step 707.
Step 704: Determine whether the uplink resource is capable of further bearing the BSR, and if yes, perform step 705.

The principle for steps 701 to 704 is the same as that of steps 201 to 204, and details are not described herein again.

Step 705: Determine whether the uplink resource is capable of bearing data to be transmitted, the extended PHR, and the BSR. If no, perform step 706.

Step 706: When the uplink resource is capable of bearing all buffered data and the BSR but incapable of bearing all buffered data and the extended PHR, cancel the triggering state of the extended PHR that has been triggered or delay multiplexing extended PHR, and determine to multiplex all the buffered data and the BSR.

Step 707: Multiplex all the buffered data and the BSR on a transport block for being transmitted to the base station.

Step 708: Multiplex, according to the original priority, the BSR, or the extended PHR, or all the buffered data on the transport block for being transmitted to the base station.

During a base station handover, all the buffered data in the embodiments shown in FIG. 1 to FIG. 7 includes a C-RNTI (Cell Radio Network Temporary Identifier, cell radio network temporary identifier) and/or a control plane message. One-to-one map all the buffered data to the foregoing embodiments according to the difference on the triggering state and so on in the scheduling information. Specifically, determine that a BSR has been triggered or determine that a PHR has been triggered; and determine whether the current uplink resource UL Grant allocated by a base station to a user equipment is capable of bearing the C-RNTI and the control plane message (for example, an RRC connection reconfiguration complete message). When the uplink resource is capable of bearing the C-RNTI and the control plane message but incapable of bearing the BSR, the C-RNTI and the control plane message, or the PHR, the C-RNTI and the control plane message, the triggering state of the BSR that has been triggered may be maintained or canceled, or the triggering state of the PHR that has been triggered may be canceled, or the triggering state of the PHR that has been triggered is maintained and multiplexing the PHR is delayed, and the C-RNTI and the control plane message are multiplexed on a transport block for being transmitted to the base station.

In another embodiment, determine that a BSR has been triggered or determine that a PHR has been triggered; and determine whether the current uplink resource UL Grant allocated by a base station to a user equipment is capable of bearing a C-RNTI and a control plane message. When the uplink resource is capable of bearing the C-RNTI and the control plane message but incapable of bearing the PHR, the BSR, the C-RNTI and the control plane message, the triggering state of the BSR that has been triggered may be maintained or canceled, and the C-RNTI and the control plane message are multiplexed on a transport block for being transmitted to the base station.

In still another embodiment, determine that a BSR has been triggered or determine that a PHR has been triggered; and determine whether the current uplink resource UL Grant allocated by a base station to a user equipment is capable of bearing a C-RNTI, the BSR, and a control plane message. When the uplink resource is capable of bearing the C-RNTI, the BSR, and the control plane message but incapable of bearing the PHR, the BSR, the C-RNTI and the control plane message, the triggering state of the PHR that has been triggered may be maintained or canceled, and the C-RNTI, the BSR, and the control plane message are multiplexed on a transport block for being transmitted to the base station.

In yet another embodiment, determine that a PHR has been triggered but a BSR has not been triggered; and determine whether the current uplink resource UL Grant allocated by a base station to a user equipment is capable of bearing a C-RNTI and a control plane message. When the uplink resource is capable of bearing the C-RNTI and the control plane message but incapable of bearing the PHR, the C-RNTI, and the control plane message, maintain the triggering state of the PHR that has been triggered and delay multiplexing the PHR, and multiplex the C-RNTI and the control plane message on a transport block for being transmitted to the base station.

In the embodiments after what shown in FIG. 7, determine according to uplink resource actually obtained by a user equipment and the triggering state of each scheduling information on the user equipment; and according to a determining result, determine a C-RNTI and a control plane message used in a handover process as multiplexing content and preferentially multiplex the C-RNTI and the control plane message on a transport block for transmission. Therefore, when a message such as a handover complete message is sent in the handover process, segmental transmission, a transmission delay, and so on caused due to the original priority are prevented, ensuring smooth transition in the handover process, preventing communications interruption of a user equipment, improving handover efficiency, and avoiding a handover delay.

In the foregoing embodiments, for scheduling information, a BSR and a PHR are taken as examples. In practical running of a user equipment, the scheduling information may further include a non-continuous reception indication (used to notify a base station of entering a non-continuous reception period) and a no data transmission indication (used to indicate to the base station that no data need to be transmitted later). In the prior art, the priority of all the scheduling information is higher than that of all buffered data. Also, multiplexing content may be determined through determining uplink resource required for transmitting all the buffered data need to be transmitted, acquired uplink resource, and the scheduling information. During the handover process, the C-RNTI and the control plane message is preferentially multiplexed, and whether to multiplex the scheduling information is determined according to the result about whether multiplexing content includes the scheduling information.

It should be noted that in the foregoing embodiments shown in FIG. 2 to FIG. 7, determine whether acquired uplink resource is capable of bearing all buffered data beforehand, and if yes, further determine whether the acquired uplink resource is capable of bearing scheduling information. In another embodiment, determine whether the acquired uplink resource is capable of bearing the scheduling information and all the buffered data beforehand, if no, further determine whether the acquired uplink resource is capable of bearing all the buffered data, and then according to the determining result, cancel or maintain the triggering state of the scheduling information, and determine the scheduling information to be multiplexed and/or the buffered data to be multiplexed.

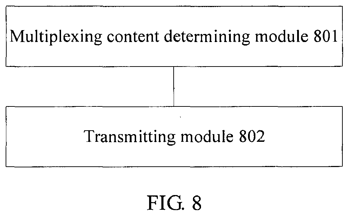

FIG. 8 is a schematic structural diagram of a device for transmitting data according to an embodiment of the present invention, including:
a multiplexing content determining module 801, which is configured to determine a triggering state of scheduling information according to a current triggering state of the scheduling information, uplink resource required for transmitting buffered data, and acquired uplink resource, and determine scheduling information to be multiplexed and/or buffered data to be multiplexed, where the scheduling information is reference information for a base station to schedule resource for a user equipment UE; and
a transmitting module 802, which is configured to multiplex the scheduling information and the buffered data which have been determined to be multiplexed on a transport block for transmission.

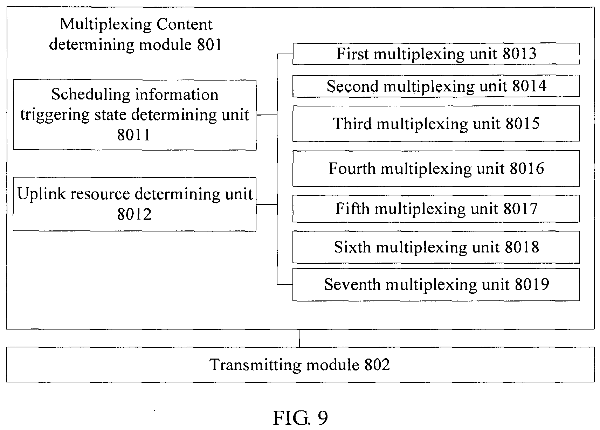

Referring to FIG. 9, the multiplexing content determining module 801 includes at least one of: a first multiplexing unit, a second multiplexing unit, a third multiplexing unit, a fourth multiplexing unit, a fifth multiplexing unit, a sixth multiplexing unit, and a seventh multiplexing unit. The scheduling information includes a BSR and/or a PHR. The multiplexing content determining module 801 includes: a scheduling information triggering state determining unit 8011, an uplink resource determining unit 8012, and a first multiplexing unit 8013.

The scheduling information triggering state determining unit 8011 is configured to determine that triggering states of the BSR and the PHR are "have been triggered".

The uplink resource determining unit 8012 is configured to determine that uplink resource is capable of bearing buffered data but incapable of bearing the buffered data and the PHR.

The first multiplexing unit 8013 is configured to: when the scheduling information triggering state determining unit determines that the triggering states of the BSR and the PHR are "have been triggered", and the uplink resource determining unit determines that the uplink resource is capable of bearing the buffered data but incapable of bearing the buffered data and the PHR, maintain the triggering state of the BSR that has been triggered and determine to multiplex the BSR, the PHR, and a part of the buffered data that is capable of being borne by remaining resource of the uplink resource.

The scheduling information includes the BSR and/or the PHR. The multiplexing content determining module 801 includes: the scheduling information triggering state determining unit 8011, the uplink resource determining unit 8012, and a second multiplexing unit 8014.

The scheduling information triggering state determining unit 8011 is configured to determine that the triggering states of the BSR and the PHR are "have been triggered".

The uplink resource determining unit 8012 is configured to determine that uplink resource is capable of bearing buffered data but incapable of bearing the buffered data and the PHR.

The second multiplexing unit 8014 is configured to: when the scheduling information triggering state determining unit determines that the triggering states of the BSR and the PHR are "have been triggered", and the uplink resource determining unit determines that the uplink resource is capable of bearing the buffered data but incapable of bearing the buffered data and the PHR, and incapable of bearing the buffered data and the BSR, cancel the triggering state of the BSR that has been triggered and determine to multiplex the buffered data, or cancel the triggering state of the PHR that has been triggered and determine to multiplex the buffered data, or maintain the triggering state of the PHR that has been triggered and determine to multiplex the buffered data.

The scheduling information includes the BSR and/or the PHR. The multiplexing content determining module 801 includes: a scheduling information triggering state determining unit 8011, an uplink resource determining unit 8012, and a third multiplexing unit 8015.

The scheduling information triggering state determining unit 8011 is configured to determine that the triggering states of the BSR and the PHR are "have been triggered".

The uplink resource determining unit 8012 is configured to determine that uplink resource is capable of bearing buffered data but incapable of bearing the buffered data and the PHR.

The third multiplexing unit 8015 is configured to: when the scheduling information triggering state determining unit determines that the triggering states of the BSR and the PHR are "have been triggered", and the uplink resource determining unit determines that the uplink resource is capable of bearing the buffered data and capable of bearing the buffered data and the BSR but incapable of bearing the buffered data, the BSR, and the PHR, determine to multiplex the buffered data and the BSR.

The scheduling information includes the BSR and/or the PHR. The multiplexing content determining module 801 includes: a scheduling information triggering state determining unit 8011, an uplink resource determining unit 8012, and a fourth multiplexing unit 8016.

The scheduling information triggering state determining unit 8011 is configured to determine that the triggering states of the BSR and the PHR are "have been triggered".

The uplink resource determining unit 8012 is configured to determine that uplink resource is capable of bearing buffered data but incapable of bearing the buffered data and the PHR.

The fourth multiplexing unit 8016 is configured to: when the scheduling information triggering state determining unit determines that the triggering states of the BSR and the PHR are "have been triggered", and the uplink resource determining unit determines that the uplink resource is capable of bearing the buffered data and capable of bearing the buffered data and the PHR but incapable of bearing the buffered data, the BSR, and the PHR, determine to multiplex the buffered data and the PHR.

The scheduling information includes the BSR and/or the PHR. The multiplexing content determining module 801 includes: a scheduling information triggering state determining unit 8011, an uplink resource determining unit 8012, and a fifth multiplexing unit 8017.

The fifth multiplexing unit 8017 is configured to: when the scheduling information triggering state determining unit determines that the triggering state of the BSR is "have been triggered" and the triggering state of the PHR is "not triggered yet", and the uplink resource determining unit determines that the uplink resource is capable of bearing the buffered data, cancel the triggering state of the BSR that has been triggered and determine to multiplex the buffered data.

The scheduling information includes the BSR and/or the PHR. The multiplexing content determining module 801 includes: a scheduling information triggering state determining unit 8011, an uplink resource determining unit 8012, and a sixth multiplexing unit 8018.

The sixth multiplexing unit 8018 is configured to: when the scheduling information triggering state determining unit determines that the triggering states of the BSR and the PHR are "have been triggered", and the uplink resource determining unit determines that the uplink resource is capable of bearing the buffered data and incapable of bearing the buffered data and the BSR that has been triggered, cancel the triggering state of the BSR that has been triggered and determine to multiplex the buffered data, or
the sixth multiplexing unit 8018 is configured to: when the scheduling information triggering state determining unit determines that the triggering states of the BSR and the PHR are "have been triggered", and the uplink resource determining unit determines that the uplink resource is incapable of bearing the buffered data and the PHR that has been triggered, cancel the triggering state of the PHR that has been triggered and determine to multiplex the buffered data, or
the sixth multiplexing unit 8018 is configured to: when the scheduling information triggering state determining unit determines that the triggering states of the BSR and the PHR are "have been triggered", and the uplink resource determining unit determines that the uplink resource is incapable of bearing the buffered data and the PHR that has been triggered, maintain the triggering state of the PHR and determine to multiplex the buffered data and delay multiplexing the PHR.

The scheduling information includes the BSR and/or the PHR. The multiplexing content determining module 801 includes: a scheduling information triggering state determining unit 8011, an uplink resource determining unit 8012, and a seventh multiplexing unit 8019.

The seventh multiplexing unit 8019 is configured to: when the scheduling information includes an extended PHR, the scheduling information triggering state determining unit determines that the triggering states of the BSR and the PHR are "have been triggered", and the uplink resource determining unit determines that the uplink resource is capable of bearing the buffered data and capable of bearing the buffered data and the BSR but incapable of bearing the buffered data and the PHR, delay multiplexing the PHR and determine to multiplex the buffered data and the BSR.

In the base station handover process, the buffered data includes a cell radio network temporary identifier and/or a control plane message of a user equipment.

The device provided in this embodiment may be a user equipment. Reference may be made to the method embodiments for the specific implementation process, and details are not described herein again.

A user equipment includes the device for transmitting data according to any one of the foregoing embodiments.

The user equipment provided in this embodiment may specifically be a mobile terminal, and is based on the same concept as the method embodiments. Therefore, reference may be made to the method embodiments for the specific implementation process, and details are not described herein again.

Further embodiments of the present invention are provided in the following. It should be noted that the numbering used in the following section does not necessarily need to comply with the numbering used in the previous sections.

Embodiment 1. A method for transmitting data, comprising:
determining a triggering state of scheduling information according to a current triggering state of the scheduling information, an uplink resource required for transmitting buffered data, and an acquired uplink resource, and determining scheduling information to be multiplexed and/or buffered data to be multiplexed, wherein the scheduling information is reference information for a base station to schedule a resource for a user equipment, UE; and
multiplexing the scheduling information determined to be multiplexed and the buffered data determined to be multiplexed on a transport block and transmitting the transport block.

Embodiment 2. The method according to Embodiment 1, wherein:
the scheduling information comprises a buffer status report BSR and/or a power headroom report PHR; and
the determining the triggering state of the scheduling information according to the current triggering state of the scheduling information, the uplink resource required for transmitting the buffered data, and the acquired uplink resource, and determining the scheduling information to be multiplexed and/or the buffered data to be multiplexed, comprises:
   determining that triggering states of the BSR and the PHR are "have been triggered" and determining that the uplink resource is capable of bearing the buffered data, and maintaining the triggering state of the BSR that has been triggered and determining to multiplex the BSR, the PHR, and a part of the buffered data that is capable of being borne by a remaining resource of the uplink resource, when the uplink resource is incapable of bearing the buffered data and the PHR; or
   determining that triggering states of the BSR and the PHR are "have been triggered", and the uplink resource is capable of bearing the buffered data, and when the uplink resource is incapable of bearing the buffered data and the PHR, and incapable of bearing the buffered data and the BSR, canceling the triggering state of the BSR that has been triggered and determining to multiplex the buffered data, or canceling the triggering state of the PHR that has been triggered and determining to multiplex the buffered data, or maintaining the triggering state of the PHR that has been triggered and determining to multiplex the buffered data; or
   determining that triggering states of the BSR and the PHR are "have been triggered", and the uplink resource is capable of bearing the buffered data, and when the uplink resource is capable of bearing the buffered data and the BSR but incapable of bearing the buffered data, the BSR, and the PHR, determining to multiplex the buffered data and the BSR; or
   determining that triggering states of the BSR and the PHR are "have been triggered", and the uplink resource is capable of bearing the buffered data, and when the uplink resource is capable of bearing the buffered data and the PHR but incapable of bearing the buffered data, the BSR, and the PHR, determining to multiplex the buffered data and the PHR.

Embodiment 3. The method according to Embodiment 1, wherein the determining the triggering state of the scheduling information according to the current triggering state of the scheduling information, the uplink resource required for transmitting the buffered data, and the acquired uplink resource, and determining the scheduling information to be multiplexed and/or the buffered data to be multiplexed, comprises:
determining that a triggering state of a BSR is "have been triggered" and a triggering state of a PHR is "not triggered yet", and determining the buffered data that is capable of being borne by the uplink resource; and
canceling the triggering state of the BSR that has been triggered and determining to multiplex the buffered data.

Embodiment 4. The method according to Embodiment 1, wherein the determining the triggering state of the scheduling information according to the current triggering state of the scheduling information, the uplink resource required for transmitting buffered data, and the acquired uplink resource, and determining the scheduling information to be multiplexed and/or the buffered data to be multiplexed, comprises:
determining that triggering states of a BSR and a PHR are "have been triggered", and the uplink resource is capable of bearing the buffered data, and when the uplink resource is incapable of bearing the buffered data and the BSR that has been triggered, canceling the triggering state of the BSR that has been triggered, and determining to multiplex the buffered data; or
determining that triggering states of a BSR and a PHR are "have been triggered", and the uplink resource is capable of bearing the buffered data, and when the uplink resource is incapable of bearing the buffered data and the PHR that has been triggered, canceling the triggering state of the PHR that has been triggered, and determining to multiplex the buffered data; or
determining that triggering states of a BSR and a PHR are "have been triggered", and the uplink resource is capable of bearing the buffered data, and when the uplink resource is incapable of bearing the buffered data and the PHR that has been triggered, maintaining the triggering state of the PHR, and determining to multiplex the buffered data and delaying multiplexing the PHR.

Embodiment 5. The method according to Embodiment 1, wherein when the scheduling information comprises an extended PHR, the determining the triggering state of the scheduling information according to the current triggering state of the scheduling information, the uplink resource required for transmitting buffered data, and the acquired uplink resource, and determining the scheduling information to be multiplexed and/or the buffered data to be multiplexed comprises:
determining that triggering states of a BSR and a PHR are "have been triggered" and determining that the uplink resource is capable of bearing the buffered data; and
when the uplink resource is capable of bearing the buffered data and the BSR and incapable of bearing the buffered data and the PHR, delaying multiplexing the PHR and determining to multiplex the buffered data and the BSR.

Embodiment 6. The method according to any one of Embodiments 1 to 5, wherein:
the buffered data comprises a cell radio network temporary identifier of the user equipment and/or a control plane message of the user equipment.

Embodiment 7. A device for transmitting data, comprising:
a multiplexing content determining module, configured to determine a triggering state of scheduling information according to a current triggering state of the scheduling information, an uplink resource required for transmitting buffered data, and an acquired uplink resource, and determine scheduling information to be multiplexed and/or buffered data to be multiplexed, wherein the scheduling information is reference information for a base station to schedule a resource for a user equipment UE; and
a transmitting module, configured to multiplex the scheduling information determined to be multiplexed and the buffered data determined to be multiplexed on a transport block and transmitting the transport block.

Embodiment 8. The device according to Embodiment 7, wherein the scheduling information comprises a BSR and/or a PHR, and the multiplexing content determining module comprises: a scheduling information triggering state determining unit, an uplink resource determining unit, and a first multiplexing unit, wherein:
the scheduling information triggering state determining unit is configured to determine that triggering states of the BSR and the PHR are "have been triggered";
the uplink resource determining unit is configured to determine that the uplink resource is capable of bearing the buffered data but incapable of bearing the buffered data and the PHR; and
the first multiplexing unit is configured to: when the scheduling information triggering state determining unit determines that the triggering states of the BSR and the PHR are "have been triggered", and the uplink resource determining unit determines that the uplink resource is capable of bearing the buffered data but incapable of bearing the buffered data and the PHR, maintain the triggering state of the BSR that has been triggered and determine to multiplex the BSR, the PHR, and a part of the buffered data that is capable of being borne by a remaining resource of the uplink resource.

Embodiment 9. The device according to Embodiment 7, wherein the scheduling information comprises a BSR and/or a PHR, and the multiplexing content determining module comprises: a scheduling information triggering state determining unit, an uplink resource determining unit, and a second multiplexing unit, wherein:
the scheduling information triggering state determining unit is configured to determine that triggering states of the BSR and the PHR are "have been triggered";
the uplink resource determining unit is configured to determine that the uplink resource is capable of bearing the buffered data but incapable of bearing the buffered data and the PHR; and
the second multiplexing unit is configured to: when the scheduling information triggering state determining unit determines that triggering states of the BSR and the PHR are "have been triggered", and the uplink resource determining unit determines that the uplink resource is capable of bearing the buffered data but incapable of bearing the buffered data and the PHR, and incapable of bearing the buffered data and the BSR, cancel the triggering state of the BSR that has been triggered and determine to multiplex the buffered data, or cancel the triggering state of the PHR that has been triggered and determine to multiplex the buffered data, or maintain the triggering state of the PHR that has been triggered and determine to multiplex the buffered data.

Embodiment 10. The device according to Embodiment 7, wherein the scheduling information comprises a BSR and/or a PHR, and the multiplexing content determining module comprises: a scheduling information triggering state determining unit, an uplink resource determining unit, and a third multiplexing unit, wherein:
the scheduling information triggering state determining unit is configured to determine that triggering states of the BSR and the PHR are "have been triggered";
the uplink resource determining unit is configured to determine that the uplink resource is capable of bearing the buffered data but incapable of bearing the buffered data and the PHR; and
the third multiplexing unit is configured to: when the scheduling information triggering state determining unit determines that triggering states of the BSR and the PHR are "have been triggered", and the uplink resource determining unit determines that the uplink resource is capable of bearing the buffered data and capable of bearing the buffered data and the BSR but incapable of bearing the buffered data, the BSR, and the PHR, determine to multiplex the buffered data and the BSR.

Embodiment 11. The device according to Embodiment 7, wherein the scheduling information comprises a BSR and/or a PHR, and the multiplexing content determining module comprises: a scheduling information triggering state determining unit, an uplink resource determining unit, and a fourth multiplexing unit, wherein:
the scheduling information triggering state determining unit is configured to determine that triggering states of the BSR and the PHR are "have been triggered";
the uplink resource determining unit is configured to determine that the uplink resource is capable of bearing the buffered data but incapable of bearing the buffered data and the PHR; and
the fourth multiplexing unit is configured to: when the scheduling information triggering state determining unit determines that triggering states of the BSR and the PHR are "have been triggered", and the uplink resource determining unit determines that the uplink resource is capable of bearing the buffered data and capable of bearing the buffered data and the PHR but incapable of bearing the buffered data, the BSR, and the PHR, determine to multiplex the buffered data and the PHR.

Embodiment 12. The device according to Embodiment 7, wherein the scheduling information comprises a BSR and/or a PHR, and the multiplexing content determining module comprises: a scheduling information triggering state determining unit, an uplink resource determining unit, and a fifth multiplexing unit, wherein:
the fifth multiplexing unit is configured to: when the scheduling information triggering state determining unit determines that a triggering state of the BSR is "have been triggered" and a triggering state of the PHR is "not triggered yet", and the uplink resource determining unit determines that the uplink resource is capable of bearing the buffered data, cancel the triggering state of the BSR that has been triggered and determine to multiplex the buffered data.

Embodiment 13. The device according to Embodiment 7, wherein the scheduling information comprises a BSR and/or a PHR, and the multiplexing content determining module comprises: a scheduling information triggering state determining unit, an uplink resource determining unit, and a sixth multiplexing unit, wherein:
the sixth multiplexing unit is configured to: when the scheduling information triggering state determining unit determines that triggering states of the BSR and the PHR are "have been triggered", and the uplink resource determining unit determines that the uplink resource is capable of bearing the buffered data and incapable of bearing the buffered data and the BSR that has been triggered, cancel the triggering state of the BSR that has been triggered and determine to multiplex the buffered data; or
the sixth multiplexing unit is configured to: when the scheduling information triggering state determining unit determines that triggering states of the BSR and the PHR are "have been triggered", and the uplink resource determining unit determines that the uplink resource is incapable of bearing the buffered data and the PHR that has been triggered, cancel the triggering state of the PHR that has been triggered and determine to multiplex the buffered data, or
the sixth multiplexing unit is configured to: when the scheduling information triggering state determining unit determines that triggering states of the BSR and the PHR are "have been triggered", and the uplink resource determining unit determines that the uplink resource is incapable of bearing the buffered data and the PHR that has been triggered, maintain the triggering state of the PHR and determine to multiplex the buffered data and delay multiplexing the PHR.

Embodiment 14. The device according to Embodiment 7, wherein the scheduling information comprises a BSR and/or a PHR, and the multiplexing content determining module comprises: a scheduling information triggering state determining unit, an uplink resource determining unit, and a seventh multiplexing unit, wherein:
the seventh multiplexing unit is configured to: when the scheduling information comprise an extended PHR the scheduling information triggering state determining unit determines that triggering states of the BSR and the PHR are "have been triggered", and the uplink resource determining unit determines that the uplink resource is capable of bearing the buffered data and capable of bearing the buffered data and the BSR but incapable of bearing the buffered data and the PHR, delay multiplexing the PHR and determine to multiplex the buffered data and the BSR.

Embodiment 15. The device according to any one of Embodiments 7 to 14, wherein the buffered data comprises a cell radio network temporary identifier and/or a control plane message of the user equipment.

Embodiment 16. A user equipment, wherein the user equipment comprises the device for transmitting data according to any one of Embodiments 7 to 12.

All or part of the foregoing technical solutions provided in the embodiments of the present invention may be implemented by a program instructing relevant hardware. The program may be stored in a readable storage medium, and the storage medium may include any medium that is capable of storing program codes, such as a ROM, a RAM, a magnetic disk, or an optical disk.

The foregoing descriptions are merely exemplary embodiments, but not intended to limit the present invention. Any modification, equivalent replacement, or improvement made within the spirit and principle of the present invention shall all fall within the protection scope of the present invention.

## Claims

1. A method for transmitting data, comprising:
determining a triggering state of scheduling information according to a current triggering state of the scheduling information, an uplink resource required for transmitting buffered data, and an acquired uplink resource, and determining scheduling information to be multiplexed and/or buffered data to be multiplexed, wherein the scheduling information is reference information for a base station to schedule a resource for a user equipment, UE; and
multiplexing the scheduling information determined to be multiplexed and/or the buffered data determined to be multiplexed on a transport block and transmitting the transport block;
wherein the scheduling information comprises a buffer status report BSR and/or a power headroom report PHR.

2. The method according to claim 1, wherein the determining the triggering state of the scheduling information according to the current triggering state of the scheduling information, the uplink resource required for transmitting buffered data, and the acquired uplink resource, and determining the scheduling information to be multiplexed and/or the buffered data to be multiplexed, comprises:
determining that triggering states of a BSR or a PHR is "has been triggered", and the uplink resource is capable of bearing the buffered data, and when the uplink resource is incapable of bearing the buffered data and the BSR or the PHR that has been triggered, canceling the triggering state of the BSR or the PHR that has been triggered, and determining to multiplex the buffered data.

3. The method according to claim 1 or 2, wherein
the buffered data includes a cell radio network temporary identifier and/or a control plane message of a user equipment.

4. A device for transmitting data, comprising:
a multiplexing content determining module, configured to determine a triggering state of scheduling information according to a current triggering state of the scheduling information, an uplink resource required for transmitting buffered data, and an acquired uplink resource, and determine scheduling information to be multiplexed and/or buffered data to be multiplexed, wherein the scheduling information is reference information for a base station to schedule a resource for a user equipment UE; and
a transmitting module, configured to multiplex the scheduling information determined to be multiplexed and/or the buffered data determined to be multiplexed on a transport block and transmitting the transport block;
wherein the scheduling information comprises a BSR and/or a PHR.

5. The device according to claim 4, wherein the multiplexing content determining module comprises: a scheduling information triggering state determining unit, an uplink resource determining unit, and a sixth multiplexing unit, wherein:
the sixth multiplexing unit is configured to: when the scheduling information triggering state determining unit determines that triggering state of a BSR or a PHR is "has been triggered", and the uplink resource determining unit determines that the uplink resource is incapable of bearing the buffered data and the BSR or the PHR that has been triggered, cancel the triggering state of the BSR or the PHR that has been triggered and determine to multiplex the buffered data.

6. The device according to claim 4 or 5, wherein
the buffered data includes a cell radio network temporary identifier and/or a control plane message of a user equipment.

7. A user equipment, wherein the user equipment comprises the device for transmitting data according to any one of claims 4 to 6.

8. A computer-readable storage medium having instruction recorded thereon; wherein the instruction is executed to implement the method of any one of claims 1 to 3.
